(19) Europäisches Patentamt
European Patent Office
Office européen des brevets

(11) Publication number: 0 232 618 B1

# (12) EUROPEAN PATENT SPECIFICATION

(45) Date of publication of patent specification: 08.08.90

(51) Int. Cl.$^5$: B 27 K 3/38, A 01 N 57/14, A 01 N 55/02, A 01 N 31/16

(21) Application number: 86310096.2

(22) Date of filing: 23.12.86

## (54) Biocide and method for protecting organic materials.

(30) Priority: 13.01.86 US 817984

(43) Date of publication of application: 19.08.87 Bulletin 87/34

(45) Publication of the grant of the patent: 08.08.90 Bulletin 90/32

(84) Designated Contracting States: BE CH DE FR GB GR IT LI LU NL SE

(56) References cited:
FR-A- 399 712
GB-A- 939 155
US-A-2 143 639
US-A-2 154 173
US-A-3 705 241
US-A-3 934 021

(73) Proprietor: INDSPEC CHEMICAL CORPORATION
Chamber of Commerce Building 411 Seventh Avenue
Pittsburgh Pennsylvania 15219 (US)

(72) Inventor: Dressler, Hans
1236 Catalina Drive
Monroeville Pennsylvania 15146 (US)
Inventor: Ward, Hans A.
4708 Sardis Road
New Kensington Pennsylvania 15068 (US)

(74) Representative: Bull, Michael Alan et al
Haseltine Lake & Co. Hazlitt House 28
Southampton Buildings Chancery Lane
London WC2A 1AT (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a biocide (i.e. a bacteriocide or fungicide) for preservative compositions useful in wood, paint, fuels, lubricants and other organic materials, and to a method of protecting organic materials from fungi and/or bacteria.

Many organic materials are subject to degradation due to fungal or bacterial attack. For example, wood is one of the best structural materials for the construction of buildings because of its strength, ease of processing, and relatively low cost, but wood has one serious drawback in that it is susceptible to discoloration and decay by wood-destroying fungi. While there are a number of materials that will control bacteria and fungi, many are highly toxic to man. It is an object of the present invention to provide compounds that are both effective biocides and also of low toxicity to man.

US—3934021 discloses mono-ethers of 2,6-di-t-butylhydroquinone useful for preventing or inhibiting scald on apples. GB—939155 discloses certain cresol compositions having insecticidal and fungicidal activity.

Accordingly, in a first aspect this invention there is provided a biocide comprising as its essential ingredient a compound of the formula:

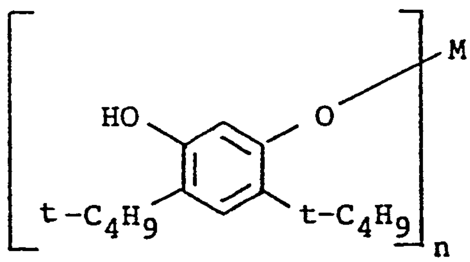

wherein M is hydrogen, phosphorus or an alkali metal or alkaline earth metal and n is 1, 2 or 3.

In a second aspect of this invention, there is provided a biocidal composition characterised in that it comprises a compound of the formula:

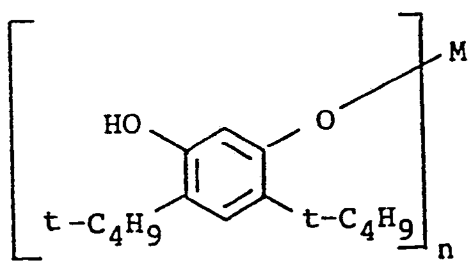

wherein M is hydrogen, phosphorus, an alkali metal or an alkaline earth metal and n is 1, 2 or 3, contained in a preservative comprising from about 90% to about 99% by weight of a solvent for said compound.

In another aspect, the present invention provides a method of protecting organic materials from fungi and/or bacteria which method is characterized by the steps of applying to or incorporating in said organic material a minor but biocidally effective amount of a compound of the formula:

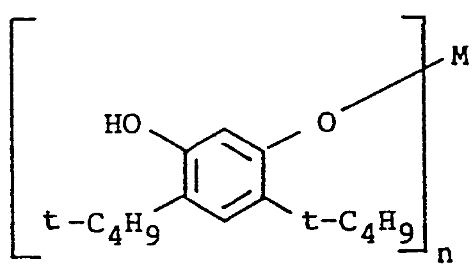

wherein M is hydrogen, phosphorus, an alkali metal or an alkaline earth metal and n is 1, 2 or 3.

In the biocide and method of the invention, the preferred alkali metals are sodium and potassium but lithium, rubidium and cessium may also be employed. Any of calcium, strontium and barium may be employed as alkaline earth metals. When M is phosphorous, n is 3; when M is hydrogen or an alkali metal, n is 1; and when M is an alkaline earth metal, n is 2.

4,6-Di-t-butylresorcinol is a known compound, and the salts can be prepared by reaction of the

appropriate metal oxide or hydroxide with the dibutylresorcinol in a suitable solvent (e.g. water, an alcohol or an alkoxyalkanol or a dihydric alcohol optionally in the presence of water) and used as thus prepared or stripped of solvent to make a dry salt which can be redispersed. Tris-(3-hydroxy-4,6-di-t-alkylphenyl) phosphite can also be made from 4,6-di-t-butylresorcinol and phosphorus trichloride in the presence of pyridine, alkylpyridines, quinolines or aryl phosphines as the catalyst and aliphatic or aromatic hydrocarbons or halogenated hydrocarbons as the solvent.

A biocidal composition comprising the biocide of the present invention can be prepared as a solution or emulsion by conventional means using water or organic solvents, or the neat materials can be used without solvents.

The quantity of biocide used will depend upon the specific application. Generally, however, they will be used in a preservative composition which will contain from about 0.01 to 100% by weight biocide; preferably from about 0.1 to about 5% by weight biocide is used. If a solvent is used it will generally comprise from about 90 to about 99% by weight of the total preservative composition. Typical solvents useful in the present invention include: water, aromatic solvents, such as xylene and toluene; alcohols, such as methanol, ethanol and hexanol; ketones such as acetone, cyclohexane and diisobutylketone; aliphatic hydrocarbons such as pentane, hexane and mineral spirits; and mixtures thereof.

If desired, the biocidal compositions of the invention may incorporate other preservatives. Typical examples of such other preservatives include pentachlorophenol, zinc naphthenate, copper naphthenate and the like.

The following Examples serve to illustrate the invention and preferred embodiments thereof, and in the Examples, as elsewhere in the specification and claims, all parts and percentages are by weight unless otherwise indicated.

Example 1

Ten small red pine wood samples (each 10 × 10 × 100 mm) were soaked for 30 seconds in a 1.0% 4,6-di-t-butylresorcinol (DTBR)/methanol solution. After air drying, the samples were placed in a dish and inoculated with a spore suspension of the mold fungus *Aspergillus niger*. The fungus growth was then measured after 4, 8 and 16 days incubation at 90% relative humidity and 32°C. Untreated control samples and pentachlorophenol-treated samples were included for comparison purposes. The results obtained are shown in the following Table 1.

TABLE 1

| Compounds | Conc. -%- | Average Mold Growth (1) on Coated Wood Samples After 4 days | 8 days | 16 days |
|---|---|---|---|---|
| Pentachlorophenol | 1.0 | -0.1 | -0.1 | -0.1 |
| 4,6-di-t-butyl resorcinol(2) | 1.0 | -0.1 | -0.1 | -0.1 |
| Control | 0 | 10.0 | 10.0 | 10.0 |

(1) Average of 10 samples
Mold: Aspergillus niger
Rating of mold growth on the samples:
-10 = inhibition zone of 10mm;
0 = no growth on the samples;
10 = samples covered with growth

(2) $LD_{50}$ = 3.08 g/kg - male rat ingestion
$LD_{50}$ > 2.00 g/kg - male rat skin penetration

From the above results, it can be seen that DTBR is equal in fungicidal effectiveness to pentachlorophenol, a commercial preservative.

Example 2

In the following Table 2 the fungicidal activity against wood-destroying fungi was determined as described above in Example I, except that there were used birch wood samples were used which were soaked with (a) 1% solutions of DTBR or (b) tris-(3-hydroxy-4,6-di-t-butylphenyl) phosphite of the formula:

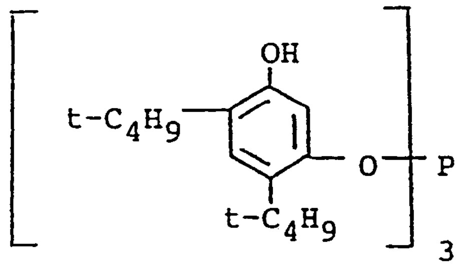

or (c) pentachlorophenol, or (d) a 1% solution of CCA—C(copper-chromium-arsenate) preservative in water. The wood samples were then placed in a dish and inoculated with mycellial suspensions of a mixture of fungi as listed in the footnote to Table II. The test specimens were then incubated for 10 days and 30 days at 90% relative humidity and 32°C.

The results obtained show that DTBR and its derived phosphite are at least as effective as, and in some cases more effective than, known preservatives such as pentachlorophenol and CCA—C.

TABLE 2

| Preservative | Conc. | Average Protection Against Brown and White Rot Decay 10 days | 30 days |
|---|---|---|---|
| | - % - | % of Sample Surface Protected | |
| 4,6-di-t-butylresorcinol | 1.0 | 109(2) | 100 |
| tris-(3-hydroxy-4,6-di-t-butylphenyl) phosphite | 1.0 | 109(2) | 100 |
| Pentachlorophenol | 1.0 | 100 | 85 |
| CCA-C | 1.0 | 100 | 100 |
| Control | --- | 0 | 0 |

(1) Average of 10 samples. Laboratory bioassay. Test Fungi: Trichoderma viride, Aspergillus niger, Paecilomyces varioti, Chaetomium globosum, Diplodia natalensis, Gloeophyllum trabeum, Coriolus vesicolor, Poria placenta, and Lentinus lepideus.

(2) Protection greater than 100% indicates an inhibition zone around the samples.

Example 3

4,6-Di-t-butylresorcinol (DTBR) was evaluated as a wood preservative against a brown-rot decay fungus, as shown in Table 3, using a standard ASTM test D1413—76 soil block test.

Again, DTBR was found to be as effective a preservative as pentachlorophenol.

TABLE 3

Toxic threshold values (kg of chemical per cubic meter of wood or kg/$m^3$ of the active ingredients) of pentachlorophenol and 4,6-di-t-butylresorcinol against the brown-rot decay fungus, *Gloeophyllum trabeum.*

| Chemical | Toxic Threshold (Value kg/$m^3$) |
|---|---|
| Pentachlorophenol | 5.77 kg/$m^3$ (0.36 pcF) |
| 4,6-di-t-butyl resorcinol | 5.77 kg/$m^3$ (0.36 pcF) |

Example 4

In an agar plate test for bactericidal activity, 4,6-di-t-butylresorcinol showed very good activity against gram positive bacteria as shown in Table 4.

TABLE 4

Agar Plate Test for Bactericidal Activity of 4,6-di-t-butylresorcinol

| Test Organism | Lowest ppm Needed to Inhibit Growth |
|---|---|
| *Aspergillus niger* | 100 |
| *Bacillus subtili* | 50 |
| *Staphylococcus aureus* | 100 |

**Claims**

1. A biocide characterised in that it comprising as its essential ingredient a compound of the formula:

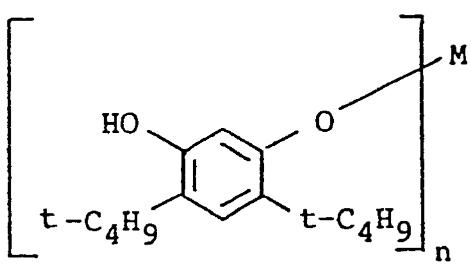

wherein M is hydrogen, phosphorus, an alkali metal or an alkaline earth metal and n is 1, 2 or 3.

2. A biocide as claimed in claim 1, characterised in that said compound is 4,6-di-t-butylresorcinol or tris-(3-hydroxy-4,6-di-t-butylphenyl) phosphite.

3. A biocidal composition characterised in that it comprises a compound of the formula:

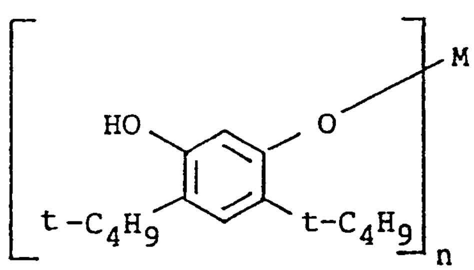

wherein M is hydrogen, phosphorus, an alkali metal or an alkaline earth metal and n is 1, 2 or 3, contained in a preservative comprising from about 90% to about 99% by weight of a solvent for said compound.

4. A biocidal composition characterised in that it comprises a biocide according to claim 2 contained in a preservative comprising from about 90% to about 99% by weight of a solvent for said biocide.

5. A method of protecting an organic material from fungi and/or bacteria which method is characterised by the step of applying to or incorporating in said organic material a minor but biocidally effective amount of a compound of the formula:

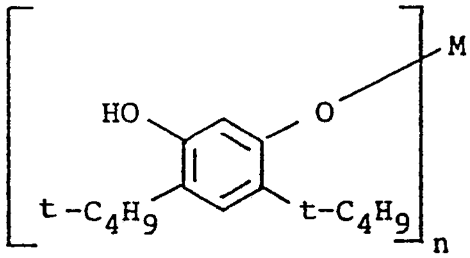

wherein M is hydrogen, phosphorus, an alkali metal or an alkaline earth metal and n is 1, 2 or 3.

6. A method according to claim 5, characterised in that said compound is 4,6-di-t-butylresorcinol or tris-(3-hydroxy-4,6-di-t-butylphenyl) phosphite.

7. A method according to claim 5 or 6, characterised in that said compound is contained in a preservative comprising from about 90% to about 99% by weight of a solvent for said compound.

8. A method according to claim 5, 6 or 7, characterised in that said organic material is wood.

**Patentansprüche**

1. Biozides Mittel, dadurch gekennzeichnet, daß es als wesentlichen Bestandteil eine Verbindung der Formel

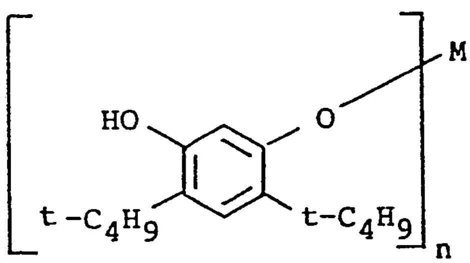

umfaßt, worin M Wasserstoff, Phosphor, ein Alkalimetall oder ein Erdalkalimetall und n 1, 2 oder 3 ist.

2. Biozides Mittel nach Anspruch 1, dadurch gekennzeichnet, daß die besagte Verbindung 4,6-Di-t-butylresorcin oder Tris-(3-hydroxy-4,6-di-t-butylphenyl)phosphit ist.

3. Biozide Zusammensetzung, dadurch gekennzeichnet, daß sie eine Verbindung der Formel:

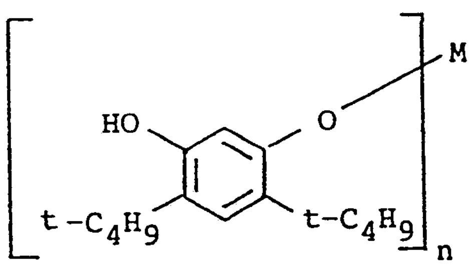

umfaßt, worin M Wasserstoff, Phosphor, ein Alkalimetall oder ein Erdalkalimetall und n 1, 2 oder 3 ist, welche in einem Konservierungsmittel enthalten ist, welches etwa 90 bis etwa 99 Gew.-% eines Lösungsmittels für die besagte Verbindung umfaßt.

4. Biozide Zusammensetzung, dadurch gekennzeichnet, daß sie ein biozides Mittel nach dem Anspruch 2 umfaßt, welches in einem Konservierungsmittel enthalten ist, welches etwa 90 bis etwa 99 Gew.-% eines Lösungsmittels für das besagte biozide Mittel umfaßt.

5. Verfahren zum Schutz eines organischen Materials vor Pilzen und/oder Bakterien, welches Verfahren durch den Schritt gekennzeichnet ist, daß eine geringe, aber biozid wirksame Menge einer Verbindung der Formel

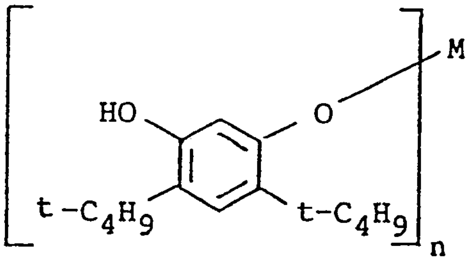

worin M Wasserstoff, Phosphor, ein Alkalimetall oder ein Erdalkalimetall und n 1, 2 oder 3 ist, auf das organische Metall aufgebracht oder diesem einverleibt wird.

6. Verfahren nach Anspruch 5, dadurch gekennzeichnet, daß die besagte Verbindung eine 4,6-Di-t-butylresorcin oder Tris-(3-hydroxy-4,6-di-t-butylphenyl)phosphit ist.

7. Verfahren nach Anspruch 5 oder 6, dadurch gekennzeichnet, daß die besagte Verbindung in einem Konservierungsmittel enthalten ist, welches etwa 90 bis etwa 99 Gew.-% eines Lösungsmittels für die besagte Verbindung umfaßt.

8. Verfahren nach Anspruch 5, 6 oder 7, dadurch gekennzeichnet, daß das organische Material Holz ist.

**Revendications**

1. Un biocide caractérisé en ce qu'il comprend comme ingrédient essentiel un composé de la formule:

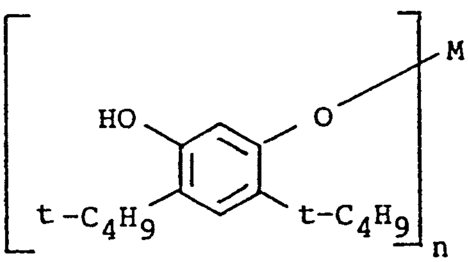

dans laquelle M est de l'hydrogène, du phosphore, um métal alcalin ou un métal alcalino-terreux, et n est 1, 2 ou 3.

2. Un biocide selon la revendication 1, caractérisé en ce que le dit composé est du phosphite 4,6-di-t-butylresorcinol ou tris-(3-hydroxy-4,6-di-t-butylphenyl).

3. Une composition biocidale caractérisé en ce qu'elle comprend un composé de la formule:

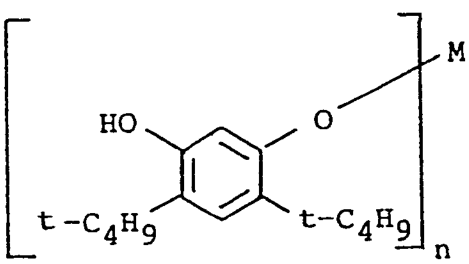

dans laquelle M est de l'hydrogène, du phosphore, um métal alcalin ou un métal alcalino-terreux, et n est 1, 2 ou 3, contenue dans un préservatif comprenant de 90 à 99% en poids environ d'un solvant pour le dit composé.

4. Une composition biocidale caractérisé en ce qu'elle comprend un biocide selon la revendication 2, contenu dans un préservatif comprenant de 90 à 99% en poids environ d'un solvant pour le dit biocide.

5. Une méthode pour la protection d'une matière organique contre les moisissures et/ou les bactéries, la dite méthode étant caractérisée par une opération d'application sur la dite matière organique, ou d'incorporation dans la dite matière organique, d'une quantité mineure mais biocidalement efficace d'un composé de la formule:

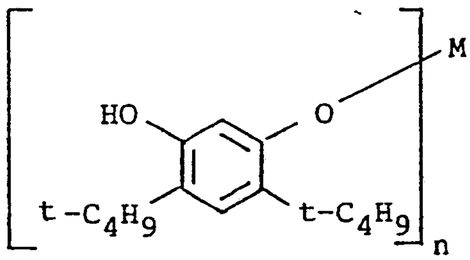

dans laquelle M est de l'hydrogène, du phosphore, un métal alcalin ou un métal alcalino-terreux, et n est 1, 2 ou 3.

6. Une méthode selon la revendication 5, caractérisée en ce que le dit composé est du phosphite 4,6-di-t-butylresorcinol ou tris-(3-hydroxy-4,6-di-t-butylphenyl).

7. Une methode selon la revendication 5 ou 6, caractérisée en ce que le dit composé est contenu dans un préservatif comprenant de 90 à 99% en poids environ d'un solvant pour le dit composé.

8. Une methode selon la revendication 5, 6 ou 7, caractérisée en ce que la dite matière organique est du bois.